# EUROPÄISCHE PATENTSCHRIFT

(11) **EP 0 797 919 B1**
(45) Veröffentlichungstag und Bekanntmachung des Hinweises auf die Patenterteilung: **03.05.2000**
(21) Anmeldenummer: 97104040.7
(22) Anmeldetag: 11.03.1997
(51) Int. Cl.: A22C 25/18

(54) **Verfahren zum restelosen Aufteilen eines quaderförmigen Blockes aus einem tiefgefrorenen Lebensmittel**
Method for dividing without waste rectangular blocks from deepfrozen food products
Procédé pour la séparation sans perte de blocs rectangulaires des produits alimentaires surgelés

(30) Priorität: 27.03.1996 DE 19612029
(43) Veröffentlichungstag der Anmeldung: 01.10.1997
(73) Patentinhaber: HEINZ NIENSTEDT MASCHINENFABRIK GMBH, D-45721 Haltern (DE)
(72) Erfinder: Rosenberger, Jörg, 45721 Haltern (DE)
(74) Vertreter: COHAUSZ HANNIG DAWIDOWICZ & PARTNER

(56) Entgegenhaltungen:
- EP-A- 0 155 328
- DE-A- 1 654 965
- DE-A- 2 844 003
- DE-A- 3 217 159
- DE-C- 4 334 107
- FR-A- 2 386 394
- US-A- 3 789 459

## Beschreibung

Ein Teil des von Fischereibetrieben gefangenen Fisches wird den weiterverarbeitenden Betrieben tiefgefroren in Blockform geliefert. Dabei hat sich eine quaderförmige Blockform zum Standard entwickelt, die ein Längen-, Breiten-, Dickenverhältnis (mm) von 482 : 254 : 62,7 hat, also etwa 8 : 4 : 1 beträgt. Ziel der weiterverarbeitenden Betriebe ist es, aus einem solchen quaderförmigen Block möglichst viele Portionen herzustellen, die ein vorgegebenes Mindestgewicht nicht unterschreiten dürfen. Bei diesem Aufteilen soll der zwangsläufig entstehende Schnittverlust möglichst klein sein und Reste möglichst ganz vermieden werden.

Die seit rund zehn Jahren andauernden Bemühungen um eine möglichst große Ausbeute beim Aufteilen eines solchen Blocks in kleine Portionen haben zu beachtlichen Erfolgen geführt. Sowohl der Einsatz dünnerer Sägen (DE 35 12 488 C2) als auch das Auffangen des beim Sägen anfallenden zerspanten Gutes und dessen Auftragen auf das tiefgefrorene Lebensmittel (DE 35 12 488 C2, DE 39 26 533 A1, DE 40 09 405 A1), als auch ein Teilen in Kombination mit Pressen (DE 43 34 107 C1), haben dazu geführt, daß der tiefgefrorene Block restelos in kleine Portionen unter Beachtung gewünschter Endabmessungen der Portionen aufgeteilt und der Schnittverlust gering gehalten werden konnte. So beträgt bei einem in der Praxis eingesetzten Verfahren, bei dem der Block mit den obigen Abmessungen in drei Stufen mit Bandsägen zunächst quer zu seiner Längsachse in zwei Hälften, dann die Hälften quer zu ihrer Teilungsebene in drei Riegel mit etwa quadratischem Querschnitt unterteilt und anschließend die Riegel in drei Platten aufgeteilt werden, die letztendlich mit einer Kreissäge in Stäbchen aufgeteilt werden, die Ausbeute an Stäbchen mit einem Format von ca. 9,75 : 20,5 : 84 mm 441 Stück. Bei diesem Aufteilen des Blockes bis zu den Stäbchen wird das beim Zersägen anfallende zerspante Gut aufgefangen und wieder aufgetragen. Letztendlich bleibt ein Schnittverlust von rund 3 %. Davon gehen 80 bis 90 % zu Lasten des Bandsägens.

Der Erfindung liegt die Aufgabe zugrunde, ein Verfahren und eine Sägelinie zum restelosen Aufteilen eines quaderförmigen Blockes aus tiefgefrorenem Lebensmittel, insbesondere Fisch, zu schaffen, mit dem beziehungsweise mit der eine höhere Ausbeute an quaderförmigen Portionen erhalten werden kann, als es mit den Verfahren und Anlagen nach dem Stand der Technik möglich ist.

Diese Aufgabe wird mit einem Verfahren zum restelosen Aufteilen eines quaderförmigen Blockes aus einem tiefgefrorenen Lebensmittel, insbesondere Fisch, dessen Länge ein Vielfaches seiner Breite und dessen Breite ein Vielfaches seiner Dicke beträgt, in eine Vielzahl von kleinen, gleichformatigen, quaderförmigen Portionen durch mehrstufiges Sägen gelöst, wobei in jeder Stufe kleinere, gleichformatige, quaderförmige Einheiten erhalten werden, wobei der Block in der ersten Stufe hochkant mittels einer Bandsäge unter Beibehaltung seines Längen-, Breitenverhältnisses in Platten aufgeteilt wird, wobei die Platten in der zweiten und dritten Stufe nach Vereinzelung flachliegend auf einer geschlossenen Platte mit von oben wirksamen Kreissägen quer zur Längsachse zweigeteilt und dann parallel zur Längsachse in Riegel dreigeteilt werden, oder in umgekehrter Reihenfolge, nämlich parallel zur Längsachse dreigeteilt und quer zur Längsachse in Riegel zweigeteilt werden, wobei die Riegel in der vierten Stufe in Querlage flachliegend auf einer geschlossenen Platte einer von oben wirksamen Kreissäge zugeführt werden, in der die Riegel im Parallelschnitt gleichzeitig in die Portionen aufgeteilt werden.

Nach einer Ausgestaltung dieses Verfahrens wird das beim Sägeschnitt zumindest an den Kreissägen, vorzugsweise aber auch an der Bandsäge, anfallende zerspante Gut aufgefangen und auf das tiefgefrorene Lebensmittel aufgetragen.

Vorrichtungsmäßig wird die Erfindung mit einer Sägelinie zum Aufteilen eines quaderförmigen, flachen Blockes aus tiefgefrorenem Lebensmittel, insbesondere Fisch, in eine Vielzahl von kleinen, gleichformatigen, quaderförmigen Portionen, bestehend aus mehreren hintereinander angeordneten und über Transporteure miteinander verbundenen Sägen, die die Blöcke in Platten, Riegel und Portionen teilen, mit folgenden Merkmalen gelöst:
a) Die in Transportrichtung erste Säge ist eine Bandsäge mit mindestens zwei Sägebändern und einer Zentrier- und Führungseinheit, die den Block in aufrechter Lage und parallel zu seiner Längsachse den Sägebändern zuführt.
b) Hinter der ersten und vor der zweiten Säge ist eine Wende- und Vereinzelungsvorrichtung für die die Säge verlassenden Platten vorgesehen.
c) Die zweite und dritte Säge sind Kreissägen, die oberhalb einer geschlossenen Platte angeordnet und mit einem beziehungsweise zwei parallelen Kreissägeblättern bestückt sind, wobei der die beiden Sägen verbindende Transporteur für eine 90°-Verdrehung der Platten eingerichtet ist, derart, daß die Platten einer der beiden Sägen quer zu deren Längsachse und der anderen der beiden Sägen parallel zu deren Längsachse zugeführt werden.
d) Die vierte Säge ist eine Kreissäge, die oberhalb einer geschlossenen Platte angeordnet ist und mit einer Vielzahl von parallelen Kreissägeblättern bestückt ist, wobei der vorgeordnete Transporteur für eine 90°-Verdrehung der ihr von der dritten Säge zugeführten Riegel eingerichtet ist, derart, daß die Riegel in Querlage flachliegend auf der Platte der Säge zugeführt werden.
e) Die Kreissägeblätter sind zwischen Versteifungsscheiben bis auf einen schmalen, der Dicke der Platten und Riegel entsprechenden Rand eingespannt.

Nach einer Ausgestaltung sind zumindest den Kreissägen, vorzugsweise aber auch der Bandsäge, Einrichtungen zum Auffangen des beim Sägen anfallenden Gutes und zum Auftragen dieses Gutes auf das tiefgefrorene Lebensmittel zugeordnet.

Bei der Erfindung ist der Einsatz von Sägebändern auf die erste Stufe des Aufteilens des tiefgefrorenen Blockes beschränkt. Da bei dem Einsatz der Bandsäge in der ersten Stufe bereits quaderförmige Einheiten erhalten werden, deren Dicke dem Maß der quaderförmigen Portionen (Stäbchen) in einer Achse entspricht, lassen sich in allen folgenden Stufen Kreissägen einsetzen, die einen vergleichsweise geringen Schnittverlust verursachen. Während beim Einsatz einer Bandsäge in Kauf genommen werden muß, daß zerspantes Gut auch unter die den Block tragende Platte gelangt, wo es für eine Wiedergewinnung im wesentlichen verloren ist, bleibt das durch die Kreissägen zerspante Gut oberhalb der die zu teilenden Einheiten tragenden geschlossenen Platten und kann mit den bewährten, bekannten Mitteln aufgefangen und wieder aufgetragen werden. Dies ist mit einer Rückgewinnungsquote von bis zu 98 % möglich. Darüber hinaus lassen sich wegen der geringen Höhe der nach der ersten Stufe erhaltenen Einheiten in allen folgenden Stufen sehr dünne Kreissägeblätter mit ausreichender Steifigkeit einsetzen, so daß von Hause aus der Schnittverlust schon gering ist. So läßt sich die Ausbeute mit der Erfindung beim Einsatz von einer Bandsäge mit einer Banddicke an den Zahnspitzen von 0,4 mm nur in der ersten Teilungsstufe und Kreissägen mit Blattdicken von bis zu 0,65 mm sowie weitgehender Rückgewinnung des zerspanten Gutes auf 450 Stäbchen bei im wesentlichen gleichen Abmessungen und gleichem Gewicht wie die Stäbchen nach dem Stand der Technik steigern.

Im folgenden wird die Erfindung anhand einer Zeichnung näher erläutert. Im einzelnen zeigen:
- Figur 1: das Verfahren des stufenweisen Aufteilens eines tiefgefrorenen Blockes in immer kleinere, quaderförmige Einheiten in schematischer Darstellung
**und**
- Figur 2: eine Sägelinie zum Aufteilen eines Blockes in schematischer Darstellung in Aufsicht.

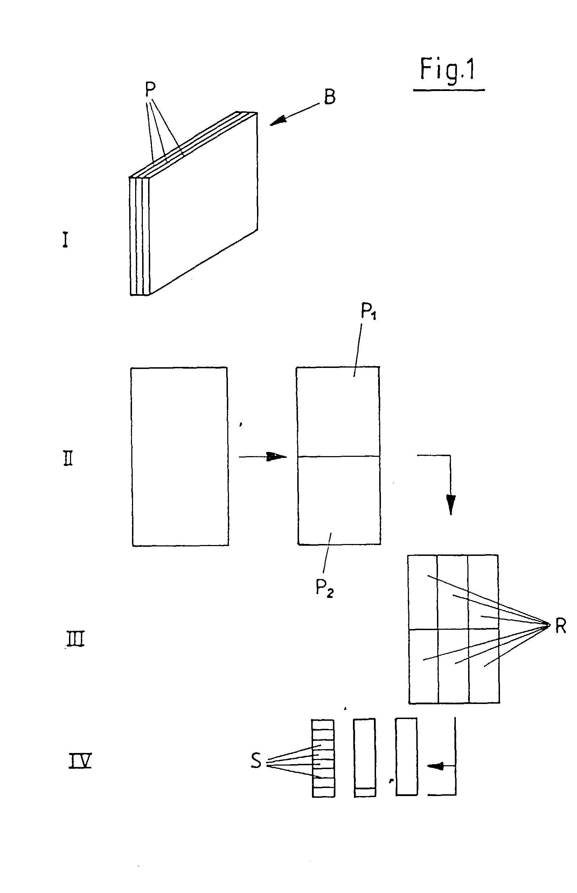

Gemäß Figur 1 wird ein in einem Umkarton angelieferter flacher quaderförmiger Block B mit einer Länge von 482 mm, einer Breite von 254 mm und einer Dicke von 62,7 mm, also mit einem Längen-, Breiten- und Dickenverhältnis von etwa 8 : 4 : 1, nach dem Entmanteln vom Umkarton hochkant einer Bandsäge mit zwei Sägebändern mit einer Banddicke an den Spitzen der verschränkten Zähne von ca. 0,4 mm zugeführt. In dieser ersten Stufe I wird der Block B in drei gleichformatige Platten P unter Beibehaltung des Längen-, Breitenverhältnisses geteilt.

Auf ihrem Weg zur zweiten Teilungsstufe II werden die Platten P gewendet, das heißt flachgelegt und in Querlage einzeln einer Kreissäge zugeführt, die die Platten P in zwei gleich große kleinere Platten P₁, P₂ teilen.

Auf ihrem weiteren Weg zur Teilungsstufe III wird die Bewegungsrichtung der Platten um 90° gedreht. In der dritten Teilungsstufe III werden die halbierten Platten P₁, P₂ mittels einer mit zwei Kreissägeblättern bestückten Kreissäge dreigeteilt, so daß aus der Platte P sechs Riegel R entstehen.

Die Riegel R werden auf ihrem Weg zur vierten und letzten Teilungsstufe IV vereinzelt und in ihrer Transportrichtung um 90° gedreht, so daß sie flachliegend und in Querlage einer Kreissäge mit einer Vielzahl von parallelen Kreissägeblättern zugeführt werden, die die Riegel R in eine Vielzahl von Stäbchen S aufteilt.

In jeder Stufe wird beim Sägen das zerspante Gut aufgefangen und vor oder hinter der Säge auf die Oberfläche der zu teilenden oder geteilten Einheiten aufgetragen.

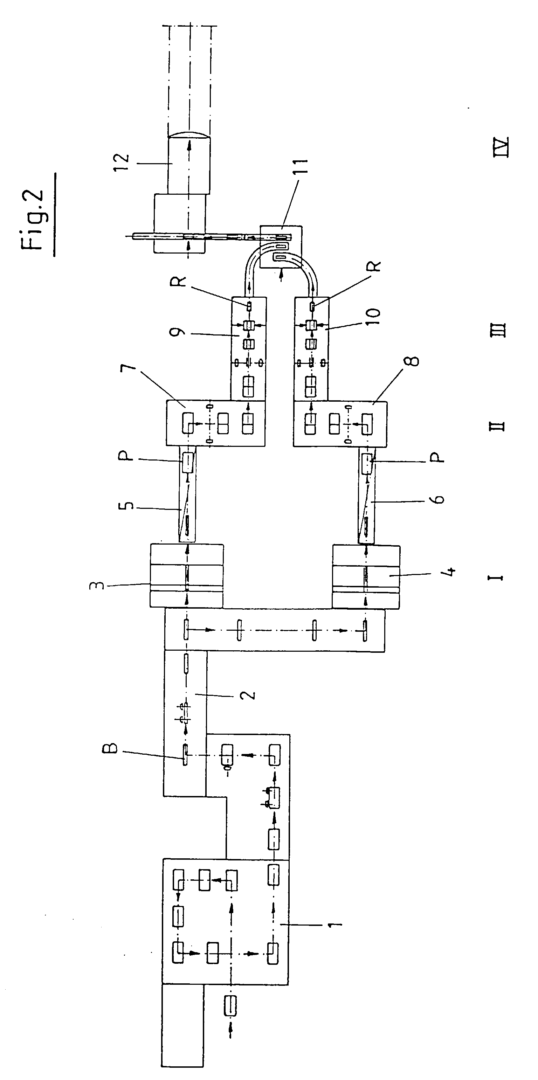

Der in Figur 2 dargestellten Anlage zum Aufteilen eines Blockes tiefgefrorenen Lebensmittels ist eine an sich bekannte Einrichtung 1 zum Entmanteln des in einem Umkarton angelieferten tiefgefrorenen Lebensmittelblockes vorgeordnet (EP 0 489 279 C2). Der entmantelte Block B gelangt hochkant und stehend auf seiner langen schmalen Seite in einen Transporteur 2, von dem die in einer Einerreihe kommenden Blöcke B in zwei Reihen aufteilt werden. Diese Aufteilung dient der Anpassung der Durchlaufgeschwindigkeiten von Entmantelungsstation 1 und nachfolgenden Teilungsstufen.

Die hochkant stehenden Blöcke B gelangen von dem Transporteur 2 in Bandsägen 3,4, die jeweils zwei Sägebänder und die Breitseiten der Blöcke B erfassende Zentrier- und Führungsmittel aufweisen. Als Bandsägen eignen sich Bandsägen, wie sie aus der DE 39 26 533 A1 oder aus der DE 40 09 405 A1 bekannt sind. Als Zentrier- und Führungsmittel eignen sich die aus der DE 40 01 050 C2 bekannten Mittel. In den Bandsägen 3,4 werden die Blöcke B unter Beibehaltung ihres Breiten-, Längenverhältnisses in drei Platten P aufgeteilt. Auf den nachgeordneten Transporteuren 5,6 werden die Platten P gewendet, das heißt flachgelegt, und vereinzelt. Nach einer Transportrichtungsdrehung um 90° gelangen die Platten P in Querlage und flachliegend auf geschlossene Tischplatten sowie seitlich geführt und zentriert zu oberhalb geschlossener Tischplatten angeordneten Kreissägen 7,8.

Die so in zwei gleichgroße - allenfalls um eine Stäbchenbreite voneinander abweichenden - Hälften aufgeteilten Platten P werden durch weitere Transporteure in der Transportrichtung um 90° gedreht und gelangen bei seitlicher Führung und Zentrierung zu weiteren oberhalb geschlossener Tischplatten angeordneten Kreissägen 9,10 mit jeweils zwei Sägeblättern, so daß am Ende der Teilungsstufen II,III Riegel R erhalten werden, die in Querlage einer Stapeleinrichtung 11 zugeführt werden, von wo sie zur letzten Teilungsstufe IV mit einer vorgeordneten Riegelvereinzelung und einer oberhalb einer geschlossenen Tischplatte angeordneten Kreissäge 12 mit einer Vielzahl von parallel nebeneinander angeordneten Sägeblättern in Querlage gelangen und hier in Stäbchen unterteilt werden.

Die jeder Kreissäge 7,8,9,10,12 zugeordneten Führungs- und Zentriermittel sind im wesentlichen gleich den erwähnten bekannten Führungs- und Zentriermitteln an der Bandsäge 3,4. Die Kreissägen haben vorzugsweise den aus der DE 35 12 488 C2 bekannten Aufbau. Jedes Kreissägeblatt hat einen Durchmesser von über 100 mm und ist zwischen zwei Versteifungsplatten eingespannt, die nur einen schmalen äußeren Rand freilassen, der eine Breite hat, die nur ein wenig größer als die Dicke der Platten P ist. Das erlaubt den Einsatz sehr dünner mit Diamantsplittern besetzter Sägeblätter von 0,6 mm oder nur wenig darüber. Wegen der geschlossenen Tischplatte bleibt das beim Sägen anfallende zerspante Gut oberhalb der Tischplatte und wird von einer Haube aufgefangen und mittels Blasluft und anderen Auftragsmitteln auf die Oberfläche des tiefgefrorenen Gutes aufgetragen, wie es beispielsweise aus der DE 35 12 488 C2 bekannt ist.

## Patentansprüche

1. Verfahren zum restelosen Aufteilen eines quaderförmigen Blockes aus einem tiefgefrorenen Lebensmittel, insbesondere Fisch, dessen Länge ein Vielfaches seiner Breite und dessen Breite ein Vielfaches seiner Dicke beträgt, in eine Vielzahl von kleinen, gleichformatigen, quaderförmigen Portionen durch mehrstufiges Sägen, wobei
a) in jeder Stufe kleinere, gleichformatige, quaderförmige Einheiten erhalten werden,
b) der Block in der ersten Stufe hochkant mittels einer Bandsäge unter Beibehaltung seines Längen-, Breitenverhältnisses in Platten aufgeteilt wird,
c) die Platten in der zweiten und dritten Stufe nach Vereinzelung flachliegend auf einer geschlossenen Platte mit von oben wirksamen Kreissägen quer zur Längsachse zweigeteilt und parallel zur Längsachse in Riegel dreigeteilt werden, oder in umgekehrter Reihenfolge, nämlich parallel zur Längsachse dreigeteilt und quer zur Längsachse in Riegel zweigeteilt werden,
**und**
d) die Riegel in der vierten Stufe in Querlage flachliegend auf einer geschlossenen Platte einer von oben wirksamen Kreissäge zugeführt werden, in der die Riegel im Parallelschnitt gleichzeitig in die Portionen aufgeteilt werden.

2. Verfahren nach Anspruch 1,
**dadurch gekennzeichnet**, daß das beim Sägen zumindest an den Kreissägen anfallende zerspante Gut aufgefangen und auf das tiefgefrorene Lebensmittel aufgetragen wird.

3. Sägelinie zum Aufteilen eines quaderförmigen, flachen Blockes (B) aus tiefgefrorenem Lebensmittel, insbesondere Fisch, in eine Vielzahl von kleinen, gleichformatigen, quaderförmigen Portionen (S), bestehend aus mehreren hintereinander angeordneten und über Transporteure miteinander verbundenen Sägen (3,4,7,8,9,10,12), die die Blöcke (B) in Platten (P), Riegel (R) und Portionen (S) teilen, wobei
a) die in Transportrichtung erste Säge (3,4) eine Bandsäge mit mindestens zwei Sägebändern und einer Zentrier- und Führungseinheit ist, die den Block (B) in aufrechter Lage und parallel zu seiner Längsachse den Sägebändern zuführt,
b) hinter der ersten und vor der zweiten Säge (3,4,7,8) eine Wende- und Vereinzelungsvorrichtung (5,6) für die die erste Säge verlassenden Platten (3,4) ist,
c) die zweite und die dritte Säge (7,8,9,10) Kreissägen sind, die oberhalb einer geschlossenen Platte angeordnet und mit einem beziehungsweise zwei parallelen Kreissägeblättern bestückt sind, wobei der die beiden Sägen (7,8,9,10) verbindende Transporteur für eine 90°-Verdrehung der Platten (P) eingerichtet ist, derart, daß die Platten (P) einer der beiden Sägen (7,8) quer zu deren Längsachse und der anderen der beiden Sägen (9,10) parallel zu deren Längsachse zugeführt werden,
d) die vierte Säge (12) eine Kreissäge ist, die oberhalb einer geschlossenen Platte angeordnet ist und mit einer Vielzahl von parallelen Kreissägeblättern bestückt ist, wobei der vorgeordnete Transporteur für eine 90°-Verdrehung der ihr von der dritten Säge (9,10) zugeführten Riegel (R) eingerichtet ist, derart, daß die Riegel (R) in Querlage flachliegend auf der Platte der Säge (12) zugeführt werden, und
e) die Kreissägeblätter zwischen Versteifungsscheiben bis auf einen schmalen, der Dicke der Platten (P) und Riegel (R) entsprechenden Rand eingespannt sind.

4. Sägelinie nach Anspruch 3,
**dadurch gekennzeichnet,** daß den Kreissägen (7,8,9,10,12) Einrichtungen zum Auffangen des beim Sägen anfallenden Gutes und zum Auftragen dieses Gutes auf das tiefgefrorene Lebensmittel zugeordnet sind.

5. Sägelinie nach Anspruch 3 oder 4,
**dadurch gekennzeichnet,** daß der Bandsäge (3,4) eine Einrichtung zum Auffangen des beim Sägen anfallenden Gutes und zum Auffangen dieses Gutes auf das tiefgefrorene Lebensmittel zugeordnet ist.

## Claims

1. A method for dividing without waste a rectangular block from a deep frozen food product, more particularly fish, whose length is a multiple of its width and whose width is a multiple of its thickness, into a plurality of small rectangular portions of identical format by multistage sawing, wherein
a) in each stage smaller rectangular units of identical format are obtained,
b) in the first stage the block is divided on edge into slabs, while maintaining its length and width ratios, by means of a ribbon saw,
c) in the second and third stages, after being separated from one another the slabs when lying flat on a closed table top are divided into two transversely of the longitudinal axis by circular saws operating from above and are divided into three parallel with the longitudinal axis to give bars, or are divided in the converse sequence, namely parallel with the longitudinal axis into three and transversely of the longitudinal axis into two to give bars, and
d) in the fourth stage the fingers lying flat in a transverse position on a closed table top are supplied to a circular saw operating from above, in which the bars are simultaneously divided into the portions by parallel cutting.

2. A method according to claim 1, characterised in that the cut material accumulating at least at the circular saws during sawing is intercepted and applied to the deep frozen food product.

3. A sawing line for dividing a flat rectangular block (B) of deep frozen food product, more particularly fish, into a plurality of small rectangular portions (S) of identical format, comprising a number of serially disposed saws (3, 4, 7, 8, 9, 10, 12) interconnected via conveyors, which divide the blocks (B) into slabs (P), bars (R) and portions (S), wherein
a) the first saw (3, 4) in the conveying direction is a ribbon saw having at least two saw ribbons and a centring and guiding unit, which applies the block (B) in the upright position and parallel with its longitudinal axis to the saw ribbons,
b) disposed between the first and second saws (3, 4, 7, 8) is a turning and separating device (5, 6) for the slabs (3, 4) leaving the first saw,
c) the second and third saws (7, 8. 9, 10) are circular saws which are disposed above a closed table top and are equipped with one or two parallel circular saw blades, the conveyor interconnecting the two saws (7, 8, 9, 10) being so adapted for a 90° rotation of the slabs (P) that said slabs (P) are supplied to one of the two saws (7, 8) transversely of its longitudinal axis and to the other of the two saws (9, 10) parallel with its longitudinal axis,
d) the fourth saw (12) is a circular saw which is disposed above a closed table top and is equipped with a plurality of parallel circular saw blades, the preceding conveyor for a 90° rotation of the bars (R) supplied thereto by the second saw (9, 10) being so adjusted that the bars (R) are supplied to the saw (12) lying flat in a transverse position on the table top,
and
e) the circular saw blades are clamped between stiffening discs, except for a narrow edge corresponding to the thickness of the slabs (P) and bars (R).

4. A sawing line according to claim 3, characterised in that associated with the circular saws (7, 8, 9, 10, 12) are devices for intercepting the material deposited during sawing and for applying said material to the deep frozen food product.

5. A sawing line according to claims 3 or 4, characterised in that associated with the ribbon saw (3, 4) is a device for intercepting the material accumulating during sawing and for applying said material to the deep frozen food product.

## Revendications

1. Procédé pour diviser sans déchets un bloc parallélépipédique d'un produit alimentaire, en particulier de poisson, surgelé dont la longueur est un multiple de sa largeur et dont la largeur est un multiple de son épaisseur, en une pluralité de petites portions parallélépipédiques de même format, par sciage en plusieurs étapes,
a) des unités parallélépipédiques de même forme, plus petites, étant obtenues à chaque étape,
b) le bloc étant divisé, dans la première étape, de chant en plaques, au moyen d'une scie à ruban en maintenant son rapport longueur-largeur,
c) les plaques étant divisées en deux, dans les deuxième et troisième étapes, après dépariage, disposés à plat sur une plaque fermée, avec des scies circulaires agissant par en haut, transversalement à l'axe longitudinal, et divisées en trois en barres parallèlement à l'axe longitudinal, ou en succession inversée, à savoir divisées en trois parallèlement à l'axe longitudinal et en deux en barres transversalement à l'axe longitudinal, et
d) les barres étant amenées, dans la quatrième étape, en position transversale disposées à plat sur une plaque fermée, à une scie circulaire agissant par en haut par laquelle les barres sont divisées simultanément, en coupe parallèle, en les portions.

2. Procédé selon la revendication 1,
caractérisé en ce que la matière coupée produite, lors du sciage, au moins aux scies circulaires est recueillie et déposée sur le produit alimentaire surgelé.

3. Ligne de scies pour diviser sans déchets un bloc (B) plat parallélépipédique d'un produit alimentaire, en particulier de poisson, surgelé, en une pluralité de petites portions (S) parallélépipédiques de même format, constituée de plusieurs scies (3, 4, 7, 8, 9, 10, 12) disposées les unes derrière les autres et reliées entre elles par des transporteurs, qui divisent les blocs (B) en plaques (P), en barres (R) et en portions (S),
a) la première scie (3, 4), en direction de transport, étant une scie à ruban avec au moins deux rubans de scie et une unité de centrage et de guidage, qui amène le bloc (B), en position debout et parallèlement à son axe longitudinal, aux rubans de scie,
b) un dispositif de pivotement et de dépariage (5, 6) pour les plaques (3, 4) quittant la première scie, se trouvant derrière la première et avant la deuxième scie (3, 4, 7, 8),
c) la deuxième et la troisième scies (7, 8, 9, 10) étant des scies circulaires qui sont disposées au-dessus d'une plaque fermée et sont équipées d'une, respectivement de deux, lames de scies circulaires parallèles, le transporteur reliant les deux scies (7, 8, 9, 10) étant aménagé pour une torsion de 90° des plaques (P) de telle sorte que les plaques (P) sont amenées à l'une des deux scies (7, 8) obliquement par rapport à son axe longitudinal et à l'autre des deux scies (9, 10) parallèlement à son axe longitudinal,
d) la quatrième scie (12) étant une scie circulaire qui est disposée au-dessus d'une plaque fermée et est équipée d'une pluralité de lames de scies circulaires parallèles, le transporteur disposé en avant étant aménagé pour une torsion de 90° des barres (R) qui lui ont été amenées par la troisième scie (9, 10), de telle sorte que les barres (R) sont amenées, en position transversale, disposées à plat sur la plaque, à la scie (12), et
e) les lames de scies circulaires étant serrées entre des disques de raidissement jusqu'à un bord étroit correspondant à l'épaisseur des plaques (P) et des barres (R).

4. Ligne de scies selon la revendication 3,
caractérisée en ce que des dispositifs pour recevoir la matière produite lors du sciage et pour déposer cette matière sur le produit alimentaire surgelé sont adjoints aux scies circulaires (7, 8, 9, 10, 12).

5. Ligne de scies selon la revendication 3 ou 4,
caractérisée en ce qu'un dispositif pour recevoir la matière produite lors du sciage et pour déposer cette matière sur le produit alimentaire surgelé est adjoint à la scie à ruban (3, 4).
